# EUROPEAN PATENT APPLICATION

(11) **EP 4 664 862 A1**
(43) Date of publication of application: **17.12.2025**
(21) Application number: 24842076.2
(22) Date of filing: 30.05.2024
(51) Int. Cl.: H04L 69/08

(54) **COMMUNICATION METHOD AND SYSTEM FOR GATEWAY DEVICE, AND STORAGE MEDIUM AND ELECTRONIC APPARATUS**

(30) Priority: 14.07.2023 CN 202310867400
(71) Applicant: ZTE CORPORATION, Shenzhen, Guangdong 518057 (CN)
(72) Inventor: ZHANG, Weiliang, Shenzhen, Guangdong 518057 (CN); JIANG, Yi, Shenzhen, Guangdong 518057 (CN); WANG, Peng, Shenzhen, Guangdong 518057 (CN)
(74) Representative: Pennacchio, Salvatore Giovanni
(86) International application number: PCT/CN2024/096465
(87) International publication number: WO 2025/016076

(57) **Abstract**

Provided in the embodiments of the present disclosure are a communication method and system for a gateway device, and a storage medium and an electronic apparatus. The method comprises: on the basis of an uplink rate supported by a master gateway device and an uplink rate supported by a slave gateway device, determining a target operating mode of the slave gateway device; and the slave gateway device communicating with the master gateway device according to the target operating mode. By using the above technical solution, the technical problem in the related art of how to realize adaptive compatibility of symmetric 2.5G FTTR and existing asymmetric 2.5G FTTR is solved.

## Description

The present disclosure claims priority to Chinese Patent Application No. 202310867400.1, filed with the Chinese Patent Office on July 14, 2023 and entitled "Communication Method and System for Gateway Device, and Storage Medium and Electronic Apparatus", which is incorporated herein by reference in its entirety.

### Technical Field

The present disclosure relates to the field of communications, and in particular to a communication method and system for a gateway device, and a storage medium and an electronic apparatus.

### Background

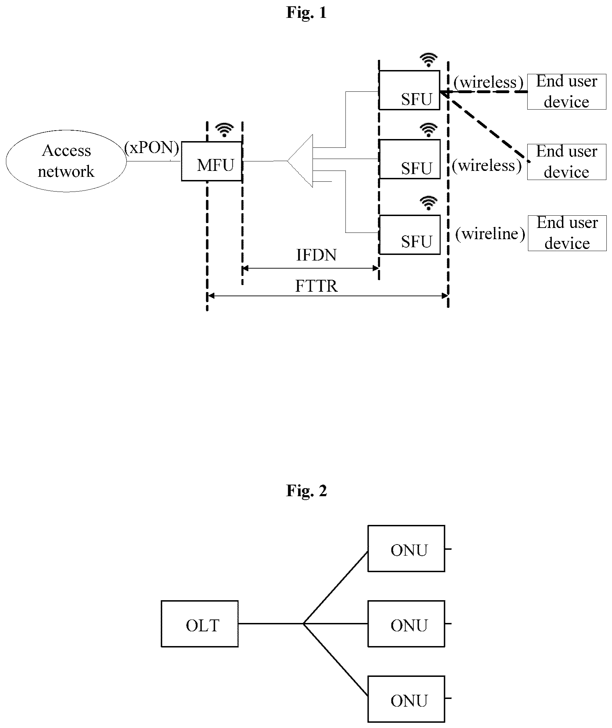

Fiber to the Room (FTTR) primarily utilizes a point to multiple point (P2MP) network architecture. As shown in Fig. 1, A Main FTTR Unit (also referred to as a main gateway in the FTTR, or simply a main gateway, hereinafter short as MFU) is connected to multiple Sub FTTR Units (also referred to as subordinate gateways in the FTTR, or simply subordinate gateways, hereinafter short as SFUs) through an Indoor Fiber Distribution Network (IFDN).

China's three major operators are actively deploying FTTR on a large scale. Given that the standards have not been officially finalized, considering that the P2MP network architecture of FTTR is similar to a Passive Optical Network (PON) architecture, in which an Optical Line Terminal (OLT) is connected to multiple Optical Network Units (ONUs) through an Optical Distribution Network (ODN), as depicted in Fig. 2, the current FTTR deployments are largely based on the mature Gigabit Passive Optical Network (GPON) standard, employing a downstream rate of 2.5G and an upstream rate of 1.25G.

Standards organizations such as the China Communications Standards Association (CCSA) and the International Telecommunications Union (ITU) are working on standardizing FTTR, and are focusing on symmetric 2.5G rates to meet the internal connectivity needs within homes, with plans to upgrade to symmetric 10G rates in the future. Ensuring compatibility with existing FTTR deployments is crucial for the symmetric 2.5G rate standardization.

Regarding the related technologies, an effective solution to achieve adaptive compatibility between symmetric 2.5G FTTR and existing asymmetric 2.5G FTTR has not yet been proposed.

Therefore, it is essential to refine the related technologies to address the stated shortcomings.

### Summary

Embodiments of the present disclosure provide a communication method and system for a gateway device, and a storage medium and an electronic apparatus, which may at least solve the technical problem of how to achieve adaptive compatibility between symmetric 2.5G FTTR and existing asymmetric 2.5G FTTR.

According to one aspect of the embodiments of the present disclosure, provided is a communication method for a gateway device, including: determining a target operation mode of a subordinate gateway device according to an upstream rate supported by a main gateway device and an upstream rate supported by the subordinate gateway device; and communicating, by the subordinate gateway device, with the main gateway device according to the target operation mode.

According to another aspect of the embodiments of the present disclosure, also provided is a communication system for a gateway device, including: a main gateway device and a subordinate gateway device, wherein the subordinate gateway device is configured to communicate with the main gateway device according to a target operation mode, wherein the target operation mode is determined according to an upstream rate supported by the main gateway device and an upstream rate supported by the subordinate gateway device.

According to yet another aspect of the embodiments of the present disclosure, also provided is a computer readable storage medium. The computer readable storage medium stores a computer program, and the computer program, when running on a processor, causes the processor to execute the communication method for the gateway device.

According to still another aspect of the embodiments of the present disclosure, also provided is an electronic apparatus, including a memory, a processor and a computer program stored in the memory and operable on the processor, wherein the processor runs the computer program to execute the communication method of the gateway device.

According to the embodiments of the present disclosure, the target operation mode of the subordinate gateway device is determined according to the upstream rate supported by the main gateway device and the upstream rate supported by the subordinate gateway device; and the subordinate gateway device communicates with the main gateway device according to the target operation mode, thereby solving the technical problem of how to achieve adaptive compatibility between symmetric 2.5G FTTR and existing asymmetric 2.5G FTTR.

### Brief Description of the Drawings

The drawings described herein are intended to provide further understanding of the present disclosure, and form a part of the present disclosure. The exemplary embodiments of the present disclosure and the description thereof are used to explain the present disclosure, and do not form improper limits to the present disclosure. In the drawings:
Fig. 1 is a schematic diagram of networking architecture of a gateway device in the related art;
Fig. 2 is a schematic diagram of networking architecture of a GPON in the related art;
Fig. 3 is a block diagram of the hardware structure of a computer terminal for implementing a communication method for a gateway device according to some embodiments of the present disclosure;
Fig. 4 is a flowchart of a communication method for a gateway device according to some embodiments of the present disclosure;
Fig. 5 is a schematic diagram of an Upstream BWmap according to some embodiments of the present disclosure;
Fig. 6 is a schematic diagram of an activation process according to some embodiments of the present disclosure; and
Fig. 7 is a structural block diagram of a communication system for a gateway device according to some embodiments of the present disclosure.

### Detailed Description of the Embodiments

In order to make those having ordinary skill in the art better understand the solutions of the present disclosure, the technical solutions in the embodiments of the present disclosure are clearly and completely described as follows with reference to the accompanying drawings in the embodiments of the present disclosure. Apparently, the described embodiments are merely a part rather than all of the embodiments of the present disclosure. All other embodiments acquired by those having ordinary skill in the art based on the embodiments of the present disclosure without creative efforts shall belong to the scope of protection of the present disclosure.

It should be noted that, terms such as "first" and "second" in the description, claims, and accompanying drawings of the present disclosure are used to distinguish similar objects, but are not necessarily used to describe a specific sequence or order. It should be understood that the data so used may be interchanged where appropriate so that embodiments of the present disclosure described herein may be implemented in sequences other than those illustrated or described herein. In addition, the terms "include" and "have", and any variations thereof, are intended to cover a non-exclusive inclusion, for example, a process, method, system, product, or apparatus that includes a series of operations or units is not necessarily limited to those operations or units that are expressly listed, but may include other operations or units that are not expressly listed or inherent to such process, method, product, or apparatus.

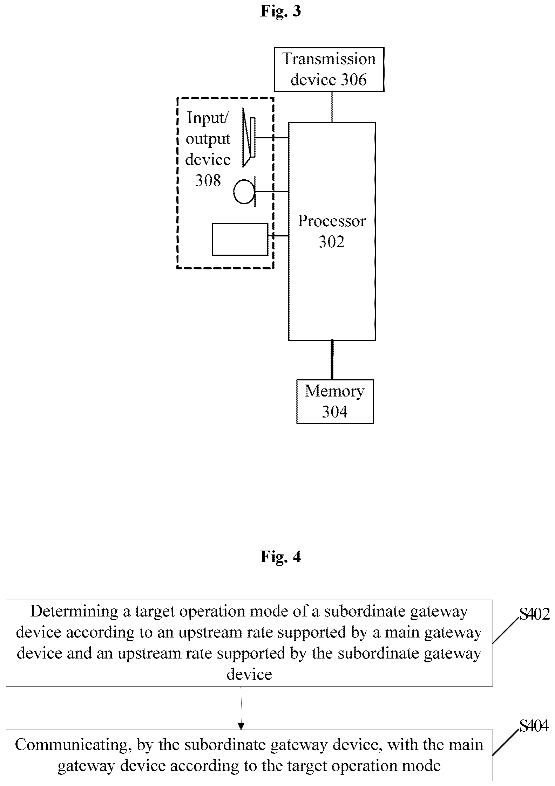

The method embodiments provided in the embodiments of the present disclosure may be executed in a computer terminal or a similar computing device. Taking the running on a computer terminal as an example, Fig. 3 is a block diagram of the hardware structure of a computer terminal for implementing a communication method for a gateway device according to some embodiments of the present disclosure. As shown in Fig. 3, the computer terminal may include one or more processors 302 (only one is shown in Fig. 3) (each of the one or more processors 302 may include but is not limited to a Microprocessor Unit (MPU), a Programmable logic Device (PLD), and a memory 304 configured to store data. In an exemplary embodiment, the computer terminal may further include a transmission device 306 configured to communicate with each other and an input/output device 308. Those having ordinary skill in the art may understand that the structure shown in Fig. 3 is merely exemplary, which does not limit the structure of the foregoing computer terminal. For example, the computer terminal may further include more or fewer components than shown in Fig. 3, or have an equivalent function to that shown in Fig. 3 or a different configuration more than that shown in Fig. 3.

The memory 304 may be configured to store a computer program, for example, a software program and a module of application software, such as a computer program corresponding to the communication method for the gateway device in the embodiments of the present disclosure. The one or more processors 302 run the computer program stored in the memory 304, so as to execute various function applications and data processing, that is, to implement the foregoing method. The memory 304 may include a high-speed random access memory, and may also include a non-volatile memory, such as one or more magnetic storage devices, flash memory, or other non-volatile solid-state memory. In some examples, the memory 304 may further include a memory remotely located with respect to the one or more processors 302, which may be connected to the computer terminal over a network. Examples of such networks include, but are not limited to, the Internet, intranets, local area networks, mobile communication networks, and combinations thereof.

The transmission device 306 is configured to receive or transmit data via a network. Specific examples of the described network may include a wireless network provided by a communication provider of the computer terminal. In an example, the transmission device 306 may include a Network Interface Controller (NIC) that may be coupled to other network devices via a base station to communicate with the Internet. In an example, the transmission device 306 can be a Radio Frequency (RF) module configured to wirelessly communicate with the Internet.

Fig. 4 is a flowchart of a communication method for a gateway device according to some embodiments of the present disclosure. As shown in Fig. 4, the communication method includes the following operations S402 and S404.

In operation S402, a target operation mode of a subordinate gateway device is determined according to an upstream rate supported by a main gateway device and an upstream rate supported by the subordinate gateway device.

In operation S404, the subordinate gateway device communicates with the main gateway device according to the target operation mode.

According to the embodiments of the present disclosure, the target operation mode of the subordinate gateway device is determined according to the upstream rate supported by the main gateway device and the upstream rate supported by the subordinate gateway device; and the subordinate gateway device communicates with the main gateway device according to the target operation mode, thereby solving the technical problem of how to achieve adaptive compatibility between symmetric 2.5G FTTR and existing asymmetric 2.5G FTTR.

The main gateway device may be referred to as a main gateway, and the subordinate gateway device may be referred to as a subordinate gateway.

In the FTTR system, the main gateway (MFU) may send its capabilities to the subordinate gateway (SFU), informing the SFU of a rate supported by the MFU in an upstream direction, i.e., the upstream rate.

As an exemplary implementation, the main gateway may send its capabilities through a serial number request (as mentioned above). The main gateway may also indicate the upstream rate by using a Protocol Layer Overhead Administration Message (PLOAM) broadcast method, such as setting and sending information in an extended Upstream_Overhead message. The subordinate gateway may check the value in the relevant field to determine the capabilities of the main gateway.

As an exemplary implementation, in a case where an Alloc-ID of the serial number request is 254, it indicates that the MFU supports a 1.25G upstream rate.

Here, Alloc-ID (Allocation Identifier) is a unique identifier used in the Gigabit Passive Optical Network (GPON) standard to identify a transmission container allocated to the ONU, and the OLT assigns bandwidth to the transmission container to give the ONU the opportunity to send upstream data.

The range of Alloc-ID is 0-4095, where 0-252 are default allocation values that align with the ONU identifiers, 253, 254, and 255 are reserved broadcast values used for ONU activation, and the other values are allocated to different ONU transmission containers.

The role of Alloc-ID is to distinguish different ONU devices and their corresponding transmission containers within the GPON network.

As an exemplary implementation, in a case where the Alloc-ID in the serial number request is 254, it indicates that the MFU supports a 1.25G upstream rate, as stipulated by the existing GPON standard.

As an exemplary implementation, in a case where the Alloc-ID in the serial number request is 255, it indicates that the MFU supports a 2.5G upstream rate.

As an exemplary implementation, in a case where the Alloc-ID in the serial number request is 253, it indicates that the MFU supports both 1.25G and 2.5G upstream rates.

As an exemplary implementation, a 2.5G FTTR main gateway may alternately send serial number requests with Alloc-ID 255 and 254, or may send a serial number request with Alloc-ID 253 alone, indicating its support for both 1.25G and 2.5G upstream rates. The following embodiments are described taking the method of alternately sending serial number requests with Alloc-ID 255 and 254 as an example, which can similarly be modified to sending a serial number request with Alloc-ID 253 alone. The 2.5G FTTR main gateway may also send a serial number request with Alloc-ID 255 or 254 alone, indicating support for only 2.5G upstream rate or only 1.25G upstream rate.

As an exemplary implementation, a 1.25G FTTR main gateway generally sends a serial number request with Alloc-ID 254.

As an exemplary implementation, the main gateway may also send its capabilities through a PLOAM message or other methods, by filling in the corresponding value in the relevant field, see the implementation method for details.

The FTTR subordinate gateway (SFU) acquires the capabilities of the FTTR main gateway (MFU) and decides its own operation mode based on the upstream rate the subordinate gateway supports.

For example, the FTTR subordinate gateway acquires the Alloc-ID carried by the serial number request sent by the FTTR main gateway to acquire the capabilities of the main gateway and decides the operation mode of the FTTR subordinate gateway.

As an exemplary implementation, for a 2.5G FTTR subordinate gateway, if the FTTR subordinate gateway receives a serial number request with Alloc-ID 255 or 253, the FTTR subordinate gateway operates in 2.5G mode; if the FTTR subordinate gateway only receives a serial number request with Alloc-ID 254, the FTTR subordinate gateway operates at a reduced speed in 1.25G mode.

As an exemplary implementation, for a 1.25G FTTR subordinate gateway, if the FTTR subordinate gateway receives a serial number request with Alloc-ID 254 or 253, the FTTR subordinate gateway responds in 1.25G mode and does not respond to a serial number request with Alloc-ID 255.

As an exemplary implementation, the FTTR subordinate gateway may also acquire the capabilities of the main gateway by checking the relevant field values in PLOAM messages or other methods, see the implementation method for details.

Through the above embodiments, it is possible to achieve compatibility between a 2.5G FTTR main gateway and a 1.25G subordinate gateway, and it is also possible for a 2.5G FTTR subordinate gateway to operate at a reduced speed under a 1.25G FTTR main gateway.

In an exemplary embodiment, before operation S402 is performed, a message field is determined from a gateway message sent by the main gateway device; and a target upstream rate indicated by a channel identifier carried in the message field is determined as the upstream rate supported by the main gateway device.

In an exemplary embodiment, the gateway message is sent in at least one of the following manners: the gateway message is periodically sent by the main gateway device, wherein the periodically sent gateway message has a same channel identifier or different channel identifiers; the gateway message is alternately sent by the main gateway device, wherein the alternately sent gateway message has different channel identifiers.

In an exemplary embodiment, before the target upstream rate indicated by the channel identifier carried in the message field is determined as the upstream rate supported by the main gateway device, a technical solution is provided, specifically including: in a case of determining that the main gateway device operates in a first operation mode, determining a first upstream rate corresponding to the first operation mode as the target upstream rate, and setting the channel identifier carried in the message field as a first identifier used for representing the first upstream rate of the first operation mode; in a case of determining that the main gateway device operates in a second operation mode, determining a second upstream rate corresponding to the second operation mode as the target upstream rate, and setting the channel identifier carried in the message field as a second identifier used for representing the second upstream rate of the second operation mode; in a case of determining that the main gateway device operates in a first operation mode and a second operation mode, determining a first upstream rate corresponding to the first operation mode and a second upstream rate corresponding to the second operation mode as the target upstream rate, and setting the channel identifier carried in the message field as a third identifier used for representing the first upstream rate of the first operation mode and the second upstream rate of the second operation mode, wherein the second upstream rate is greater than the first upstream rate.

In an exemplary embodiment, for an implementation process of determining the target operation mode of the subordinate gateway device according to the upstream rate supported by the main gateway device and the upstream rate supported by the subordinate gateway device, the specific operations include: acquiring all operation modes supported by the subordinate gateway device, wherein each of all the operation modes corresponds to an upstream rate; and determining the target operation mode supporting the target upstream rate from all the operation modes.

As an exemplary implementation, the intersection of all operation modes supported by the subordinate gateway device and all operation modes supported by the main gateway device may be taken to acquire a set of operation modes. From this set of operation modes, an optimal operation mode may be selected as the aforementioned target operation mode. For instance, the operation mode with the highest upstream rate in the set of operation modes may be determined as the target operation mode to enhance upstream transmission capacity and reduce upstream transmission latency; or the operation mode with the lowest upstream rate in the set of operation modes may be determined as the target operation mode to reduce the energy consumption required for upstream transmission, etc. If there is only one operation mode in the set, this operation mode may be determined as the target operation mode.

In an exemplary embodiment, a plurality of technical solutions for realizing the determination of the target operation mode supporting the target upstream rate from all the operation modes are provided, which are respectively described as follows.

Solution 1: with regard to a first-type subordinate gateway device, in a case where at least two message fields alternately sent by a first-type main gateway device according to a preset period are received, all channel identifiers carried in the at least two message fields are determined, wherein the first-type main gateway device supports a first operation mode and a second operation mode, the first-type subordinate gateway device supports the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; and the second operation mode supporting the second upstream rate is determined as the target operation mode.

Solution 2: with regard to a second-type subordinate gateway device, in a case where at least two message fields alternately sent by a first-type main gateway device according to a preset period are received, all channel identifiers carried in the at least two message fields are determined, wherein the first-type main gateway device supports a first operation mode and a second operation mode, the second-type subordinate gateway device only supports the first operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; and the first operation mode supporting the first upstream rate is determined as the target operation mode.

Solution 3: with regard to third-type subordinate gateway devices, in a case where at least two message fields alternately sent by a first-type main gateway device according to a preset period are received, all channel identifiers carried in the at least two message fields are determined, wherein the first-type main gateway device supports a first operation mode and a second operation mode, the third-type subordinate gateway devices support the first operation mode and the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; for a subordinate gateway device supporting the first operation mode in the third-type subordinate gateway devices, the first operation mode supporting the first upstream rate is determined as the target operation mode; and for a subordinate gateway device supporting the second operation mode in the third-type subordinate gateway devices, the second operation mode supporting the second upstream rate is determined as the target operation mode.

Solution 4: with regard to a second-type subordinate gateway device, in a case where message fields sent by a second-type main gateway device according to a preset period are received, channel identifiers carried in the message fields sent according to the preset period are determined, wherein the second-type main gateway device supports a first operation mode, the second-type subordinate gateway device supports the first operation mode, and the channel identifiers include a first identifier for supporting a first upstream rate, wherein the first upstream rate is an upstream rate corresponding to the second-type main gateway device when operating in the first operation mode; and the first operation mode supporting the first upstream rate is determined as the target operation mode.

Solution 5: with regard to a first-type subordinate gateway device, in a case where message fields sent by a second-type main gateway device according to a preset period are received, channel identifiers carried in the message fields sent according to the preset period are determined, wherein the second-type main gateway device supports a first operation mode, and the first-type subordinate gateway device supports a second operation mode; and in a case where all channel identifiers received within a preset duration are the first identifier used for supporting the first upstream rate, the first operation mode supporting the first upstream rate is determined as the target operation mode; or in a case where all channel identifiers received continuously for a preset number of times are the first identifier used for supporting the first upstream rate, the first operation mode supporting the first upstream rate is determined as the target operation mode, wherein the first upstream rate is an upstream rate corresponding to the second-type main gateway device when operating in the first operation mode.

Solution 6: with regard to a first-type subordinate gateway device, in a case where at least two message fields alternately sent by a first-type main gateway device according to a preset period are received, all channel identifiers carried in the at least two message fields are determined, wherein the first-type main gateway device supports a first operation mode and a second operation mode, the first-type subordinate gateway device supports the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; the first operation mode supporting the first upstream rate is determined as the target operation mode; configuration information sent by the first-type subordinate gateway device during activation is acquired, and the configuration information is sent to the first-type main gateway device, so as to trigger the first-type main gateway device to configure the first-type subordinate gateway device to support the second operation mode; and the second operation mode supporting the second upstream rate is determined as the target operation mode.

Solution 7: with regard to a first-type subordinate gateway device, in a case where at least two message fields alternately sent by a first-type main gateway device according to a preset period are received, all channel identifiers carried in the at least two message fields are determined, wherein the first-type main gateway device supports a first operation mode and a second operation mode, the first-type subordinate gateway device supports the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; the first operation mode supporting the first upstream rate is determined as the target operation mode; in a case of determining that the first-type subordinate gateway device receives another second identifier after activation is completed, the first-type subordinate gateway device is re-activated; and in a case of determining that the first-type subordinate gateway device receives the second identifier during re-activating of the first-type subordinate gateway device, the second operation mode supporting the second upstream rate is determined as the target operation mode.

Solution 8: with regard to third-type subordinate gateway devices, in a case where message fields sent by a second-type main gateway device according to a preset period are received, channel identifiers carried in the message fields sent according to the preset period are determined, wherein the second-type master gateway device supports a first operation mode, and the third type subordinate gateway devices support the first operation mode and a second operation mode, the channel identifiers include a first identifier for supporting a first upstream rate and a second identifier for supporting a second upstream rate, wherein the first upstream rate is an upstream rate corresponding to the second-type main gateway device when operating in the first operation mode, and the second upstream rate is an upstream rate corresponding to the second-type main gateway device when operating in the second operation mode; for a subordinate gateway device supporting the first operation mode in the third-type subordinate gateway devices, in a case of determining that the subordinate gateway device supporting the first operation mode receives the first identifier, the first operation mode supporting the first upstream rate is determined as the target operation mode; for a subordinate gateway device supporting the second operation mode in the third-type subordinate gateway devices, in a case of determining that the subordinate gateway device supporting the second operation mode receives the first identifier and does not receive the second identifier, the first operation mode supporting the first upstream rate is determined as the target operation mode.

As an exemplary implementation of an exemplary embodiment, the channel identifier is carried in the message field in at least one of the following manners: carrying the channel identifier by a serial number request field; or carrying the channel identifier by a Protocol Layer Overhead Administration Message (PLOAM) field.

The embodiment may further include a solution 9, in which extended burst length information is determined from the PLOAM field in a case where the channel identifier is carried by the PLOAM field; the target upstream rate indicated by the channel identifier carried in the message field is determined, and the target operation mode of the subordinate gateway device supporting the target upstream rate is determined, wherein the operation of determining the target upstream rate indicated by the channel identifier carried in the message field, and determining the target operation mode of the subordinate gateway device supporting the target upstream rate includes: determining the target upstream rate indicated by the extended burst length information, and determining the target operation mode of the subordinate gateway device supporting the target upstream rate.

As an exemplary implementation of this embodiment, the target upstream rate indicated by the extended burst length information may also be determined, and the target operation mode of the subordinate gateway device supporting the target upstream rate may be determined from all operation modes.

In an exemplary embodiment, the operation S404 may further includes the following implementation operations: determining an upstream rate of an operation mode of the subordinate gateway device during a power-on operation; in a case of determining that the main gateway device supports the upstream rate of the operation mode of the subordinate gateway device during the power-on operation, communicating, by the subordinate gateway device, with the main gateway device according to the target operation mode; acquiring external configuration information in a case of determining that the main gateway device does not support the upstream rate of the operation mode of the subordinate gateway device during the power-on operation; and switching, based on the external configuration information, the upstream rate of the operation mode of the subordinate gateway device during the power-on operation, until the main gateway device supports the upstream rate of the operation mode of the subordinate gateway device during the power-on operation.

In an exemplary embodiment, after the operation S404, in response to a starting instruction for starting the subordinate gateway device, an activation process preset for the subordinate gateway device may be acquired; and the subordinate gateway device may be activated according to the activation process.

The communication method for the gateway device will be further illustrated with reference to exemplary embodiments.

The real-time preparation task for implementing the communication method for the gateway device in the present disclosure is introduced as follows.

At present, the FTTR standards of CCSA and ITU-T are mainly the modification and improvement based on the GPON and 10-Gigabit-capable Symmetric Passive Optical Network (XGS-PON) standards. The following extension will be applied taking the GPON as an example.

Results of the modification to the Alloc-ID of the GPON standard are shown in Table 1 below. The main modification is the extension of the Alloc-ID for the serial number request.

**Table 1: Alloc-ID information table**

| **Alloc-ID** | **Specification** | **Comment** |
|---|---|---|
| 0..252 | Default | Default Alloc-ID, which is implicitly assigned with and is equal to the ONU-ID. |
| 253 | Broadcast | Used by OLT in a serial number request allocation structure to indicate that any ONU at 1.24416 or 2.48832 Gbit/s upstream line rate which executes the serial number acquisition phase of the activation procedure may use this allocation to transmit a serial number response. |
| 254 | Broadcast | Used by OLT in a serial number request allocation structure to indicate that any ONU at 1.24416 Gbit/s upstream line rate which executes the serial number acquisition phase of the activation procedure may use this allocation to transmit a serial number response. |
| 255 | Broadcast | Used by OLT in a serial number request allocation structure to indicate that any ONU at 2.48832 Gbit/s upstream line rate which executes the serial number acquisition phase of the activation procedure may use this allocation to transmit a serial number response. |
| 256..4095 | Assignable | If more than a single Alloc-ID is needed for an ONU, the OLT assigns additional Alloc-IDs to that ONU by selecting a unique number from this range and communicating it to the ONU using the Assign_Alloc-ID PLOAM message. |

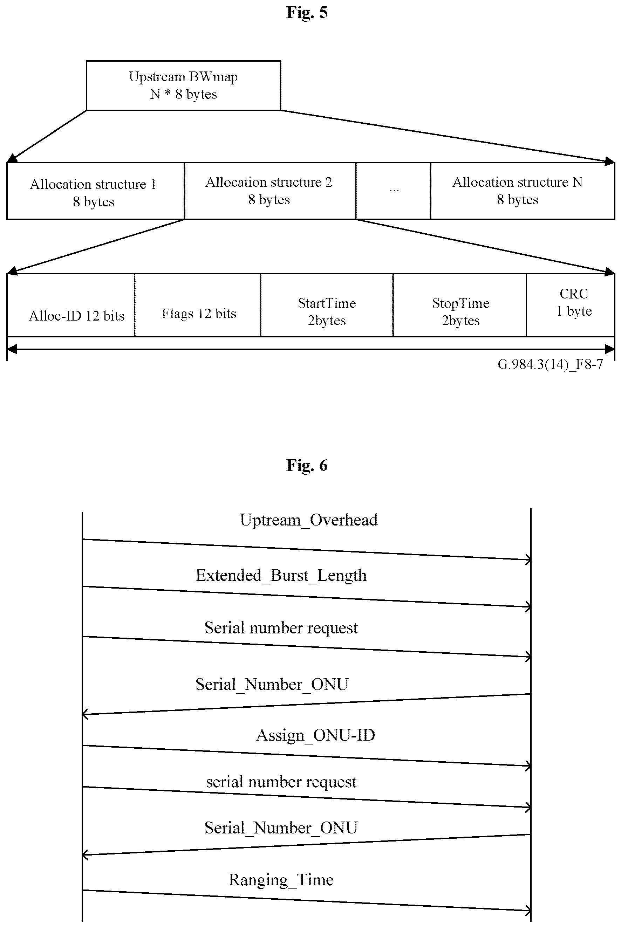

The serial number request is a bandwidth allocation entry, belonging to an entry in an Upstream BWmap. The Upstream BWmap is shown in Fig. 5.

The serial number request is generally defined as: Alloc-ID=a specified value (originally taken as 254, now defined as a value for upstream 1.25G rate SFU activation, wherein the value is extended to additionally include two values 255 and 253, see the above table for details), bit 10 in the Flags field, PLOAMu = '1', StartTime = X, and StopTime = X + 12, used for sending an upstream PLOAM message with a length of 13 bytes.

As an example for the main gateway to notify its capabilities through the PLOAM message, an original Extended_Burst_Length message is extended, where the ss bits in the 5th byte are shown in Table 2, used to represent the supported upstream rates.

Of course, it is also possible to extend other existing PLOAM messages or define new PLOAM messages, which will not be further described in the present disclosure.

**Table 2: Extended Burst Length Information**

| **Extended_Burst_Length message** | | |
|---|---|---|
| **Octet** | **Content** | **Description** |
| 1 | 11111111 | Broadcast message to all ONUs. |
| 2 | 00010100 | Message identification "Extended_Burst_Length" (Note 1). |
| 3 | pppppppp | pppppppp = Number of type 3 preamble bytes to be used while the ONU remains in the 'pre-ranged' states: Serial_Number state (O3) and Ranging state (O4). Each byte of the type 3 preamble contains the pattern specified in octet 6 of the Upstream_Overhead message. (Note 2). |
| 4 | rrrrrrrr | rrrrrrrr = Number of type 3 preamble bytes to be used after the ONU enters the Operation state (O5). Each byte of the type 3 preamble contains the pattern specified in Octet 6 of the Upstream_Overhead message (Note 2). |
| 5 | 000000ss | ss = 00, reserved |
| | | ss = 01, supporting an upstream rate of 1.24416 Gbit/s |
| | | ss = 10, supporting an upstream rate of 2.48832 Gbit/s |
| | | ss = 11, supporting upstream rates of 1.24416 Gbit/s and 2.48832 Gbit/s |
| 6-12 | Unspecified | Reserved for future study. |

The upstream rate of 1.24416 Gbit/s shown in Table 2 corresponds to the "1.25G" operation mode (i.e., the aforementioned first operation mode), and the upstream rate of 2.48832 Gbit/s corresponds to the "2.5G" operation mode (i.e., the aforementioned second operation mode).

The term "1.25G" upstream rate mentioned in the present disclosure refers to the "1.25G" operation mode, while the "2.5G" upstream rate refers to the "2.5G" operation mode.

GPON can periodically perform the activation process, for example, sending a serial number request every 10 seconds. As shown in Fig. 6, the activation process of GPON specifically includes the following operations.

In following introduction for the activation process of GPON, the ONU during the GPON activation process may be understood as the aforementioned subordinate gateway (SFU), and the OLT during the GPON activation process may be understood as the aforementioned main gateway (MFU).

After the ONU entering the activation process listens to downstream transmission and acquires PSync and superframe synchronization, the ONU waits for an Upstream_Overhead PLOAM message, and optionally, waits for subsequent Extended_Burst_Length PLOAM message periodically issued by the OLT. The ONU receives PON operation parameters (the length and mode of the burst mode overhead parts, the value of the pre-allocated delay, and the initial optical power level) through the Upstream_Overhead and Extended_Burst_Length messages. The ONU announces its presence on the PON by responding to the broadcast serial number request periodically issued by the OLT with a Serial_Number_ONU message. The OLT discovers the serial number of the newly connected ONU and assigns the ONU-ID to this ONU using an Assign_ONU-ID message. The OLT sends a directed serial number request to the newly discovered ONU and precisely detect the timing of the ONU's response. The OLT calculates the individual equalization delay and sends this equalization delay to the ONU using the Ranging_Time message. The ONU adjusts the start of its upstream GTC frame clock based on the allocated equalization delay. The ONU completes activation and begins normal operation.

Furthermore, for other switching methods beyond the protocol, the upstream rate may be configured through software or through external hardware. That is, it is possible to first configure a certain upstream rate, attempt activation based on such upstream data, and if activation cannot be completed, switch to another upstream rate. Of course, if it is a software configuration method, it is also possible to implement an automatic attempt at software configuration methods.

The communication method for the gateway device may include, for example, the following implementations.

### Implementation 1:

For a networking scenario involving a 2.5G MFU (i.e., the aforementioned first-type main gateway device) and a 2.5G SFU (i.e., the aforementioned first-type subordinate gateway device), the 2.5G MFU main gateway, which supports both 1.25G and 2.5G upstream rates, periodically initiates an activation process, for example, once every 10 seconds, with the Alloc-ID carried in the serial number request alternating in each activation process, that is, one time with Alloc-ID=255, allowing SFUs with a 2.5G upstream rate to activate; another time with Alloc-ID=254, allowing SFUs with a 1.25G upstream rate to activate.

If the 2.5G SFU detects the serial number request with Alloc-ID=255, the 2.5G SFU ignores the serial number request with Alloc-ID=254, opts to operate in symmetric 2.5G mode, responds to the serial number request by sending a Serial_Number_ONU message, and continues to complete the activation according to the GPON activation process.

### Implementation 2:

For a networking scenario involving a 2.5G MFU (i.e., the aforementioned first-type main gateway device) and a 1.25G SFU (i.e., the aforementioned second-type subordinate gateway device), the 2.5G MFU main gateway, which supports both 1.25G and 2.5G upstream rates, periodically initiates an activation process, for example, once every 10 seconds, with the Alloc-ID carried in the serial number request alternating in each activation process, that is, one time with Alloc-ID=255, allowing SFUs with a 2.5G upstream rate to activate; another time with Alloc-ID=254, allowing SFUs with a 1.25G upstream rate to activate.

If the 1.25G SFU detects a serial number request with Alloc-ID=254, but does not support a serial number request with Alloc-ID=255, the 1.25G SFU responds to the serial number request with Alloc-ID=254 by sending a Serial_Number_ONU message and continues to complete the activation according to the GPON activation process.

### Implementation 3:

For a hybrid networking scenario involving a 2.5G MFU (i.e., the aforementioned first-type main gateway device) and both 2.5G SFU and 1.25G SFU (i.e., the aforementioned third-type subordinate gateway devices), the 2.5G MFU main gateway, which supports both 1.25G and 2.5G upstream rates, periodically initiates an activation process, for example, once every 10 seconds, with the Alloc-ID carried in the serial number request alternating in each activation process, that is, one time with Alloc-ID=255, allowing SFUs with a 2.5G upstream rate to activate; another time with Alloc-ID=254, allowing SFUs with a 1.25G upstream rate to activate.

If the 1.25G SFU detects a serial number request with Alloc-ID=254, but does not support a serial number request with Alloc-ID=255, the 1.25G SFU responds to the serial number request with Alloc-ID=254 by sending a Serial_Number_ONU message and continues to complete the activation according to the GPON activation process.

If the 2.5G SFU detects a serial number request with Alloc-ID=255, the 2.5G SFU ignores the serial number request with Alloc-ID=254, opts to operate in symmetric 2.5G mode, responds to the serial number request by sending a Serial_Number_ONU message, and continues to complete the activation according to the GPON activation process.

### Implementation 4:

For a networking scenario involving a 1.25G MFU (i.e., the aforementioned second-type main gateway device) and a 1.25G SFU (i.e., the aforementioned second-type subordinate gateway device), the 1.25G MFU main gateway periodically initiates an activation process, sending serial number requests with Alloc-ID=254 in the standard mode.

If the 1.25G SFU detects a serial number request with Alloc-ID=254, the 1.25G SFU responds to the serial number request by sending a Serial_Number_ONU message and continues to complete the activation according to the GPON activation process.

### Implementation 5:

This implementation is an automatic switching mechanism based on the protocol.

For a networking scenario involving a 1.25G MFU (i.e., the aforementioned second-type main gateway device) and a 2.5G SFU (i.e., the aforementioned first-type subordinate gateway device), the 1.25G MFU main gateway periodically initiates an activation process, sending serial number requests with Alloc-ID=254 in the standard mode.

If the 2.5G SFU subordinate gateway only detects serial number requests with Alloc-ID=254 within a certain period of time (for example, within 1 minute) or within a certain number of attempts (for example, within 10 attempts), but does not detect any serial number requests with Alloc-ID=255, the 2.5G SFU subordinate gateway will downgrade to the 1.25G mode, respond to the serial number request by sending a Serial_Number_ONU message, and continue to complete the activation according to the GPON activation process.

### Implementation 6:

This implementation extends upon Implementation 1.

For a networking scenario involving a 2.5G MFU (i.e., the aforementioned first-type main gateway device) and a 2.5G SFU (i.e., the aforementioned first-type subordinate gateway device), the 2.5G SFU may initially operate in 1.25G mode (possibly because when the MFU broadcasts its capabilities, the SFU does not detect a serial number request with Alloc-ID 255), but the 2.5G SFU may report its support for the 2.5G mode during an activation process or after completion of activation, and the MFU configures the SFU to operate in 2.5G mode after the activation is completed.

The 2.5G SFU may report its support for the 2.5G mode during the activation process through an extended Serial_Number_ONU message, as shown in Table 3 below, where the A bit in the 12th byte being 1 indicates that the SFU supports the 2.5G mode.

**Table 3: Serial number ONU Information Table**

| **Serial_Number_ONU** | | |
|---|---|---|
| **Octet** | **Content** | **Description** |
| 1 | 11111111 | No ONU-ID was assigned yet. |
| | ONU-ID | If the ONU-ID was assigned to this ONU. |
| 2 | 00000001 | Message identification "Serial_Number_ONU". |
| 3 | VID1 | Vendor_ID byte 1. |
| 4 | VID2 | Vendor_ID byte 2. |
| 5 | VID3 | Vendor_ID byte 3. |
| 6 | VID4 | Vendor_ID byte 4 (Note 1). |
| 7 | VSSN1 | Vendor-specific serial number byte 1. |
| 8 | VSSN2 | Vendor-specific serial number byte 2. |
| 9 | VSSN3 | Vendor-specific serial number byte 3. |
| 10 | VSSN4 | Vendor-specific serial number byte 4. |
| 11 | RRRRRRRR | The random delay (MSB) (In 32-byte units) used by the ONU when sending this message. |
| 12 | RRRRAGTT | RRRR = random delay (LSB) (in 32-byte units) used by the ONU when sending this message. |
| | | A=0; this bit shall not be evaluated by the OLT. |
| | | A=1, indicating that the SFU supports a 2.5G rate |
| | | G = GEM transport is supported by this ONU (G = 1: supported). |
| | | TT = ONU TX Power Level Mode used by the ONU. |
| | | TT = 00: Low power. |
| | | TT = 01: Medium power. |
| | | TT = 10: High power. |
| | | TT = 11: Reserved. |

The 2.5G MFU configures the upstream rate of the SFU through an extended Assign_ONU-ID message, and the SFU, based on this configuration, uses the corresponding upstream rate for the transmission of subsequent upstream messages and frames. The extended Assign_ONU-ID message is shown in Table 4 below, where the r bit in the 12th byte being 1 indicates that the SFU is configured to operate in a mode corresponding to the upstream rate of 2.5G.

**Table 4: Assign_ONU-ID information table**

| **Assign_ONU-ID message** | | |
|---|---|---|
| **Octet** | **Content** | **Description** |
| 1 | 11111111 | Broadcast message to all ONUs. |
| 2 | 00000011 | Message identification "Assign_ONU-ID". |
| 3 | pppppppp | ONU-ID. |
| 4 | abcdefgh | Serial number byte 1. |
| 5-10 | ..... | |
| 11 | stuvwxyz | Serial number byte 8. |
| 12 | 0000000r | r=0, the upstream rate is set to be 1.25G |
| | | r=1, the upstream rate is set to be 2.5G |

Definitely, after the activation is completed, the SFU may report the upstream rate mode of the SFU through other messages, and the MFU may configure the upstream rate mode of the SFU through other messages, but the communication method is similar and will not be repeated here.

### Implementation 7:

This implementation expands upon Implementation 1.

For a networking scenario involving a 2.5G MFU (i.e., the aforementioned first-type main gateway device) and a 2.5G SFU (i.e., the aforementioned first-type subordinate gateway device), the 2.5G SFU may initially operate in 1.25G mode (possibly because when the MFU broadcasts its capabilities, the SFU does not detect a serial number request with Alloc-ID 255). After completion of activation, if the SFU detects a serial number request with Alloc-ID=255, the SFU will reinitiate the activation process, switch to operate in 2.5G mode, wait for and detect serial number requests with Alloc-ID=255, and complete the activation according to the GPON activation process.

### Implementation 8:

For a hybrid networking scenario involving a 1.25G MFU (i.e., the aforementioned second-type main gateway device) and both 1.25G SFU and 2.5G SFU (i.e., the aforementioned third-type subordinate gateway devices), the 1.25G MFU periodically sends serial number requests with Alloc-ID=254.

If the 1.25G SFU detects a serial number request with Alloc-ID=254, the 1.25G SFU responds to the serial number request by sending a Serial_Number_ONU message and continues to complete the activation according to the GPON activation process.

If the 2.5G SFU only detects serial number requests with Alloc-ID=254 within a certain period of time (for example, within 1 minute) or within a certain number of attempts (for example, within 10 attempts), and does not detect any serial number requests with Alloc-ID=255, the 2.5G SFU will switch to 1.25G mode, respond to the serial number request by sending a Serial_Number_ONU message, and continue to complete the activation according to the GPON activation process.

### Implementation 9:

In this implementation, the serial number request is replaced with a PLOAM message. Based on the aforementioned implementation methods, the main gateway MFU broadcasts its capabilities using an extended Extended_Burst_Length message, and the subordinate gateway SFU receives and parses the extended Extended_Burst_Length message to acquire the MFU's upstream rate capabilities and determines its own upstream rate. The traditional serial number request with Alloc-ID=254 may still be used to complete the activation process according to the activation process, which is similar to the aforementioned implementation methods, and will not be further elaborated here.

### Implementation 10:

In this implementation, the SFU may be configured to select the upstream rate mode through external configurations. Based on the aforementioned implementation methods, for a 2.5G SFU, the SFU may choose an upstream rate mode upon powering on; if the MFU supports its upstream rate, then the 2.5G SFU completes the activation according to the activation process; otherwise, the SFU switches the upstream rate mode through external configurations, such as software settings or hardware switch controls, and continues to attempt the activation process.

### Implementation 11:

In this implementation, the SFU may be configured to store the upstream rate mode locally. Based on the aforementioned implementation methods, after the SFU completes the activation process, the SFU may store the current upstream rate mode, which is not easily lost even if the SFU loses power. Upon subsequent restart of the SFU, the stored upstream rate mode is read, and the SFU operates according to the stored upstream rate mode, waiting for the corresponding serial number request or PLOAM message to complete the activation according to the GPON activation process.

The embodiments of the present disclosure further provide a communication system for a gateway device. The system is configured to implement the described embodiments and exemplary implementations, and what has been described will not be elaborated. The term "module", as used hereinafter, is a combination of software and/or hardware capable of realizing a predetermined function. Although the device described in the following embodiment is preferably implemented by software, implementation of hardware or a combination of software and hardware is also possible and conceived.

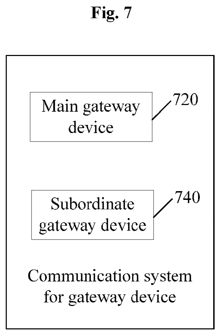

Fig. 7 is a structural block diagram of a communication system for a gateway device according to some embodiments of the present disclosure. As shown in Fig. 7, the communication system for the gateway device includes: a main gateway device 720 and a subordinate gateway device 740. The subordinate gateway device 740 is configured to communicate with the main gateway device 720 according to a target operation mode, wherein the target operation mode is determined according to an upstream rate supported by the main gateway device and an upstream rate supported by the subordinate gateway device.

According to the embodiments of the present disclosure, the target operation mode of the subordinate gateway device is determined according to the upstream rate supported by the main gateway device and the upstream rate supported by the subordinate gateway device; and the subordinate gateway device communicates with the main gateway device according to the target operation mode, thereby solving the technical problem of how to achieve adaptive compatibility between symmetric 2.5G FTTR and existing asymmetric 2.5G FTTR.

Further, the communication system for the gateway device further includes a control center, and the control center or the subordinate gateway device is configured to determine the target operation mode of the subordinate gateway device according to the upstream rate supported by the main gateway device and the upstream rate supported by the subordinate gateway device.

As an exemplary implementation of the embodiment, the control center or the subordinate gateway device is further configured to determine a message field from a gateway message sent by the main gateway device; and determine a target upstream rate indicated by a channel identifier carried in the message field as the upstream rate supported by the main gateway device.

As an exemplary implementation of the embodiment, the gateway message is sent in at least one of the following manners: the gateway message is periodically sent by the main gateway device, wherein the periodically sent gateway message has a same channel identifier or different channel identifiers; the gateway message is alternately sent by the main gateway device, wherein the alternately sent gateway message has different channel identifiers.

As an exemplary implementation of the embodiment, the control center or the subordinate gateway device is further configured to, before determining the target upstream rate indicated by the channel identifier carried in the message field as the upstream rate supported by the main gateway device, in a case of determining that the main gateway device operates in a first operation mode, determine a first upstream rate corresponding to the first operation mode as the target upstream rate, and set the channel identifier carried in the message field as a first identifier used for representing the first upstream rate of the first operation mode; in a case of determining that the main gateway device operates in a second operation mode, determine a second upstream rate corresponding to the second operation mode as the target upstream rate, and set the channel identifier carried in the message field as a second identifier used for representing the second upstream rate of the second operation mode; in a case of determining that the main gateway device operates in a first operation mode and a second operation mode, determine a first upstream rate corresponding to the first operation mode and a second upstream rate corresponding to the second operation mode as the target upstream rate, and set the channel identifier carried in the message field as a third identifier used for representing the first upstream rate of the first operation mode and the second upstream rate of the second operation mode, wherein the second upstream rate is greater than the first upstream rate.

As an exemplary implementation of the embodiment, the control center or the subordinate gateway device is configured to acquire all operation modes supported by the subordinate gateway device, wherein each of all the operation modes corresponds to an upstream rate; and determine the target operation mode supporting the target upstream rate from all the operation modes.

As an exemplary implementation of the embodiment, the control center or the subordinate gateway device is further configured to, with regard to a first-type subordinate gateway device, in a case where at least two message fields alternately sent by a first-type main gateway device according to a preset period are received, determine all channel identifiers carried in the at least two message fields, wherein the first-type main gateway device supports a first operation mode and a second operation mode, the first-type subordinate gateway device supports the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; and determine the second operation mode supporting the second upstream rate as the target operation mode.

As an exemplary implementation of the embodiment, the control center or the subordinate gateway device is further configured to, with regard to a second-type subordinate gateway device, in a case where at least two message fields alternately sent by a first-type main gateway device according to a preset period are received, determine all channel identifiers carried in the at least two message fields, wherein the first-type main gateway device supports a first operation mode and a second operation mode, the second-type subordinate gateway device only supports the first operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; and determine the first operation mode supporting the first upstream rate as the target operation mode.

As an exemplary implementation of the embodiment, the control center or the subordinate gateway device is further configured to determine the target operation mode supporting the target upstream rate from all the operation modes in a following manner: with regard to third-type subordinate gateway devices, in a case where at least two message fields alternately sent by a first-type main gateway device according to a preset period are received, determining all channel identifiers carried in the at least two message fields, wherein the first-type main gateway device supports a first operation mode and a second operation mode, the third-type subordinate gateway devices support the first operation mode and the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; for a subordinate gateway device supporting the first operation mode in the third-type subordinate gateway devices, determining the first operation mode supporting the first upstream rate as the target operation mode; and for a subordinate gateway device supporting the second operation mode in the third-type subordinate gateway devices, determining the second operation mode supporting the second upstream rate as the target operation mode.

As an exemplary implementation of the embodiment, the control center or the subordinate gateway device is further configured to, with regard to a second-type subordinate gateway device, in a case where message fields sent by a second-type main gateway device according to a preset period are received, determine channel identifiers carried in the message fields sent according to the preset period, wherein the second-type main gateway device supports a first operation mode, the second-type subordinate gateway device supports the first operation mode, and the channel identifiers include a first identifier for supporting a first upstream rate, wherein the first upstream rate is an upstream rate corresponding to the second-type main gateway device when operating in the first operation mode; and determine the first operation mode supporting the first upstream rate as the target operation mode.

As an exemplary implementation of the embodiment, the control center or the subordinate gateway device is further configured to, with regard to a first-type subordinate gateway device, in a case where message fields sent by a second-type main gateway device according to a preset period are received, determine channel identifiers carried in the message fields sent according to the preset period, wherein the second-type main gateway device supports a first operation mode, and the first-type subordinate gateway device supports a second operation mode; and in a case where all channel identifiers received within a preset duration are the first identifier used for supporting the first upstream rate, determine the first operation mode supporting the first upstream rate as the target operation mode; or in a case where all channel identifiers received continuously for a preset number of times are the first identifier used for supporting the first upstream rate, determine the first operation mode supporting the first upstream rate as the target operation mode, wherein the first upstream rate is an upstream rate corresponding to the second-type main gateway device when operating in the first operation mode.

As an exemplary implementation of the embodiment, the control center or the subordinate gateway device is further configured to, with regard to a first-type subordinate gateway device, in a case where at least two message fields alternately sent by a first-type main gateway device according to a preset period are received, determine all channel identifiers carried in the at least two message fields, wherein the first-type main gateway device supports a first operation mode and a second operation mode, the first-type subordinate gateway device supports the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; determine the first operation mode supporting the first upstream rate as the target operation mode; acquire configuration information sent by the first-type subordinate gateway device during activation, and send the configuration information to the first-type main gateway device, so as to trigger the first-type main gateway device to configure the first-type subordinate gateway device to support the second operation mode; and determine the second operation mode supporting the second upstream rate as the target operation mode.

As an exemplary implementation of the embodiment, the control center or the subordinate gateway device is further configured to, with regard to a first-type subordinate gateway device, in a case where at least two message fields alternately sent by a first-type main gateway device according to a preset period are received, determine all channel identifiers carried in the at least two message fields, wherein the first-type main gateway device supports a first operation mode and a second operation mode, the first-type subordinate gateway device supports the second operation mode, and all the channel identifiers include a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; determine the first operation mode supporting the first upstream rate as the target operation mode; in a case of determining that the first-type subordinate gateway device receives another second identifier after activation is completed, re-activate the first-type subordinate gateway device; and in a case of determining that the first-type subordinate gateway device receives the second identifier during re-activating of the first-type subordinate gateway device, determine the second operation mode supporting the second upstream rate as the target operation mode.

As an exemplary implementation of the embodiment, the control center or the subordinate gateway device is further configured to, with regard to third-type subordinate gateway devices, in a case where message fields sent by a second-type main gateway device according to a preset period are received, determine channel identifiers carried in the message fields sent according to the preset period, wherein the second-type master gateway device supports a first operation mode, and the third type subordinate gateway devices support the first operation mode and a second operation mode, the channel identifiers include a first identifier for supporting a first upstream rate and a second identifier for supporting a second upstream rate, wherein the first upstream rate is an upstream rate corresponding to the second-type main gateway device when operating in the first operation mode, and the second upstream rate is an upstream rate corresponding to the second-type main gateway device when operating in the second operation mode; for a subordinate gateway device supporting the first operation mode in the third-type subordinate gateway devices, in a case of determining that the subordinate gateway device supporting the first operation mode receives the first identifier, determine the first operation mode supporting the first upstream rate as the target operation mode; for a subordinate gateway device supporting the second operation mode in the third-type subordinate gateway devices, in a case of determining that the subordinate gateway device supporting the second operation mode receives the first identifier and does not receive the second identifier, determine the first operation mode supporting the first upstream rate as the target operation mode.

As an exemplary implementation of the embodiment, the channel identifier is carried in the message field in at least one of the following manners: carrying the channel identifier by a serial number request field; or carrying the channel identifier by a Protocol Layer Overhead Administration Message (PLOAM) field.

As an exemplary implementation of the embodiment, the control center or the subordinate gateway device is further configured to determine extended burst length information from the PLOAM field in a case of carrying the channel identifier by the PLOAM field; determine the target upstream rate indicated by the channel identifier carried in the message field, and determine the target operation mode of the subordinate gateway device supporting the target upstream rate, which includes: determining the target upstream rate indicated by the extended burst length information, and determining the target operation mode of the subordinate gateway device supporting the target upstream rate.

In an exemplary embodiment, the control center or the subordinate gateway device is further configured to determine an upstream rate of an operation mode of the subordinate gateway device during a power-on operation; in a case of determining that the main gateway device supports the upstream rate of the operation mode of the subordinate gateway device during the power-on operation, communicate, by the subordinate gateway device, with the main gateway device according to the target operation mode; acquire external configuration information in a case of determining that the main gateway device does not support the upstream rate of the operation mode of the subordinate gateway device during the power-on operation; and switch, based on the external configuration information, the upstream rate of the operation mode of the subordinate gateway device during the power-on operation, until the main gateway device supports the upstream rate of the operation mode of the subordinate gateway device during the power-on operation.

In an exemplary embodiment, the control center or the subordinate gateway device is further configured to acquire an activation process preset for the subordinate gateway device in response to a starting instruction for starting the subordinate gateway device; and activate the subordinate gateway device according to the activation process.

Through the description of the foregoing embodiments, those having ordinary skill in the art may clearly understand that the communication method according to the foregoing embodiments may be implemented by software in addition to a necessary universal hardware platform, and definitely may also be implemented by hardware. However, in many cases, the former is a preferred implementation. Based on such understanding, the essence of the technical solutions of the present disclosure or the part contributing to the related art may be embodied in the form of a software product, the computer software product is stored in a readable storage medium (such as a Read-Only Memory (ROM)/Random Access Memory (RAM), a magnetic disk, and an optical disk), and includes several instructions for instructing a terminal device (which may be a mobile phone), a computer, a server, a network device, or the like.

In an exemplary embodiment, the computer readable storage medium may include, but is not limited to, any medium that can store a computer program, such as a Universal Serial Bus (USB) flash drive, an ROM, an RAM, a removable hard disk, a magnetic disk, or an optical disc.

For specific examples in this embodiment, reference may be made to the examples described in the foregoing embodiments and exemplary embodiments, and details are not repeatedly described in this embodiment.

The embodiments of the present disclosure further provide an electronic apparatus, including a memory and a processor. The memory stores a computer program. The processor is configured to run the computer program to execute operations in any one of the method embodiments.

As an exemplary implementation of this embodiment, the processor may be configured to execute the following operations by means of a computer program:
In operation S1, a target operation mode of a subordinate gateway device is determined according to an upstream rate supported by a main gateway device and an upstream rate supported by the subordinate gateway device.

In operation S2, the subordinate gateway device communicates with the main gateway device according to the target operation mode.

In an exemplary embodiment, the electronic apparatus may further include a transmission device and an input/output device, wherein the transmission device is connected to the processor, and the input/output device is connected to the processor.

Alternatively, in this embodiment, the above-described electronic apparatus may also be configured to perform the above-described operations S1 and S2 by a computer program.

For specific examples in this embodiment, reference may be made to the examples described in the foregoing embodiments and exemplary embodiments, and details are not repeatedly described in this embodiment.

Obviously, those having ordinary skill in the art should understand that each module or each operation of the present disclosure can be implemented by a universal computing device, they may be centralized on a single computing device or distributed on a network composed of a plurality of computing devices, they can be implemented by program codes executable by a computing apparatus, and thus can be stored in a storage apparatus and executed by the computing apparatus. Furthermore, in some cases, the shown or described operations may be executed in an order different from that described here, or they are made into integrated circuit modules respectively, or a plurality of modules or operations therein are made into a single integrated circuit module for implementation. As such, the present disclosure is not limited to any particular hardware and software combination.

The foregoing descriptions are merely exemplary embodiments of the present disclosure, but are not intended to limit the present disclosure. For those having ordinary skill in the art, the present disclosure may have various modifications and variations. Any modifications, equivalent replacements, improvements and the like made within the principle of the present disclosure shall fall within the scope of protection of the present disclosure.

## Claims

1. A communication method for a gateway device, wherein the communication method comprises:
determining a target operation mode of a subordinate gateway device according to an upstream rate supported by a main gateway device and an upstream rate supported by the subordinate gateway device; and
communicating, by the subordinate gateway device, with the main gateway device according to the target operation mode.

2. The communication method for the gateway device according to claim 1, wherein before determining the target operation mode of the subordinate gateway device according to the upstream rate supported by the main gateway device and the upstream rate supported by the subordinate gateway device, the communication method further comprises:
determining a message field from a gateway message sent by the main gateway device; and
determining a target upstream rate indicated by a channel identifier carried in the message field as the upstream rate supported by the main gateway device.

3. The communication method according to claim 2, wherein the gateway message is sent in at least one of the following manners:
the gateway message is periodically sent by the main gateway device, wherein the periodically sent gateway message has a same channel identifier or different channel identifiers;
the gateway message is alternately sent by the main gateway device, wherein the alternately sent gateway message has different channel identifiers.

4. The communication method for the gateway device according to claim 2, wherein before determining the target upstream rate indicated by the channel identifier carried in the message field as the upstream rate supported by the main gateway device, the communication method further comprises:
in a case of determining that the main gateway device operates in a first operation mode, determining a first upstream rate corresponding to the first operation mode as the target upstream rate, and setting the channel identifier carried in the message field as a first identifier used for representing the first upstream rate of the first operation mode;
in a case of determining that the main gateway device operates in a second operation mode, determining a second upstream rate corresponding to the second operation mode as the target upstream rate, and setting the channel identifier carried in the message field as a second identifier used for representing the second upstream rate of the second operation mode;
in a case of determining that the main gateway device operates in a first operation mode and a second operation mode, determining a first upstream rate corresponding to the first operation mode and a second upstream rate corresponding to the second operation mode as the target upstream rate, and setting the channel identifier carried in the message field as a third identifier used for representing the first upstream rate of the first operation mode and the second upstream rate of the second operation mode,
wherein the second upstream rate is greater than the first upstream rate.

5. The communication method for the gateway device according to claim 2, wherein determining the target operation mode of the subordinate gateway device according to the upstream rate supported by the main gateway device and the upstream rate supported by the subordinate gateway device comprises:
acquiring all operation modes supported by the subordinate gateway device, wherein each of all the operation modes corresponds to an upstream rate; and
determining the target operation mode supporting the target upstream rate from all the operation modes.

6. The communication method for the gateway device according to claim 5, wherein determining the target operation mode supporting the target upstream rate from all the operation modes comprises:
with regard to a first-type subordinate gateway device, in a case where at least two message fields alternately sent by a first-type main gateway device according to a preset period are received, determining all channel identifiers carried in the at least two message fields,
wherein the first-type main gateway device supports a first operation mode and a second operation mode, the first-type subordinate gateway device supports the second operation mode, and all the channel identifiers comprise a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; and
determining the second operation mode supporting the second upstream rate as the target operation mode.

7. The communication method for the gateway device according to claim 5, wherein determining the target operation mode supporting the target upstream rate from all the operation modes comprises:
with regard to a second-type subordinate gateway device, in a case where at least two message fields alternately sent by a first-type main gateway device according to a preset period are received, determining all channel identifiers carried in the at least two message fields,
wherein the first-type main gateway device supports a first operation mode and a second operation mode, the second-type subordinate gateway device only supports the first operation mode, and all the channel identifiers comprise a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode; and
determining the first operation mode supporting the first upstream rate as the target operation mode.

8. The communication method for the gateway device according to claim 5, wherein determining the target operation mode supporting the target upstream rate from all the operation modes comprises:
with regard to third-type subordinate gateway devices, in a case where at least two message fields alternately sent by a first-type main gateway device according to a preset period are received, determining all channel identifiers carried in the at least two message fields,
wherein the first-type main gateway device supports a first operation mode and a second operation mode, the third-type subordinate gateway devices support the first operation mode and the second operation mode, and all the channel identifiers comprise a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode;
for a subordinate gateway device supporting the first operation mode in the third-type subordinate gateway devices, determining the first operation mode supporting the first upstream rate as the target operation mode; and
for a subordinate gateway device supporting the second operation mode in the third-type subordinate gateway devices, determining the second operation mode supporting the second upstream rate as the target operation mode.

9. The communication method for the gateway device according to claim 5, wherein determining the target operation mode supporting the target upstream rate from all the operation modes comprises:
with regard to a second-type subordinate gateway device, in a case where message fields sent by a second-type main gateway device according to a preset period are received, determining channel identifiers carried in the message fields sent according to the preset period,
wherein the second-type main gateway device supports a first operation mode, the second-type subordinate gateway device supports the first operation mode, and the channel identifiers comprise a first identifier for supporting a first upstream rate, wherein the first upstream rate is an upstream rate corresponding to the second-type main gateway device when operating in the first operation mode; and
determining the first operation mode supporting the first upstream rate as the target operation mode.

10. The communication method for the gateway device according to claim 5, wherein determining the target operation mode supporting the target upstream rate from all the operation modes comprises:
with regard to a first-type subordinate gateway device, in a case where message fields sent by a second-type main gateway device according to a preset period are received, determining channel identifiers carried in the message fields sent according to the preset period, wherein the second-type main gateway device supports a first operation mode, and the first-type subordinate gateway device supports a second operation mode; and
in a case where all channel identifiers received within a preset duration are the first identifier used for supporting the first upstream rate, determining the first operation mode supporting the first upstream rate as the target operation mode; or
in a case where all channel identifiers received continuously for a preset number of times are the first identifier used for supporting the first upstream rate, determining the first operation mode supporting the first upstream rate as the target operation mode,
wherein the first upstream rate is an upstream rate corresponding to the second-type main gateway device when operating in the first operation mode.

11. The communication method for the gateway device according to claim 5, wherein determining the target operation mode supporting the target upstream rate from all the operation modes comprises:
with regard to a first-type subordinate gateway device, in a case where at least two message fields alternately sent by a first-type main gateway device according to a preset period are received, determining all channel identifiers carried in the at least two message fields,
wherein the first-type main gateway device supports a first operation mode and a second operation mode, the first-type subordinate gateway device supports the second operation mode, and all the channel identifiers comprise a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode;
determining the first operation mode supporting the first upstream rate as the target operation mode;
acquiring configuration information sent by the first-type subordinate gateway device during activation, and sending the configuration information to the first-type main gateway device, so as to trigger the first-type main gateway device to configure the first-type subordinate gateway device to support the second operation mode; and
determining the second operation mode supporting the second upstream rate as the target operation mode.

12. The communication method for the gateway device according to claim 5, wherein determining the target operation mode supporting the target upstream rate from all the operation modes comprises:
with regard to a first-type subordinate gateway device, in a case where at least two message fields alternately sent by a first-type main gateway device according to a preset period are received, determining all channel identifiers carried in the at least two message fields,
wherein the first-type main gateway device supports a first operation mode and a second operation mode, the first-type subordinate gateway device supports the second operation mode, and all the channel identifiers comprise a first identifier for supporting a first upstream rate and a second identifier for supporting a second upstream rate, wherein the first upstream rate is an upstream rate corresponding to the first-type main gateway device when operating in the first operation mode, and the second upstream rate is an upstream rate corresponding to the first-type main gateway device when operating in the second operation mode;
determining the first operation mode supporting the first upstream rate as the target operation mode;
in a case of determining that the first-type subordinate gateway device receives another second identifier after activation is completed, re-activating the first-type subordinate gateway device; and
in a case of determining that the first-type subordinate gateway device receives the second identifier during re-activating of the first-type subordinate gateway device, determining the second operation mode supporting the second upstream rate as the target operation mode.

13. The communication method for the gateway device according to claim 5, wherein determining the target operation mode supporting the target upstream rate from all the operation modes comprises:
with regard to third-type subordinate gateway devices, in a case where message fields sent by a second-type main gateway device according to a preset period are received, determining channel identifiers carried in the message fields sent according to the preset period,
wherein the second-type master gateway device supports a first operation mode, and the third type subordinate gateway devices support the first operation mode and a second operation mode, the channel identifiers comprise a first identifier for supporting a first upstream rate and a second identifier for supporting a second upstream rate, wherein the first upstream rate is an upstream rate corresponding to the second-type main gateway device when operating in the first operation mode, and the second upstream rate is an upstream rate corresponding to the second-type main gateway device when operating in the second operation mode;
for a subordinate gateway device supporting the first operation mode in the third-type subordinate gateway devices, in a case of determining that the subordinate gateway device supporting the first operation mode receives the first identifier, determining the first operation mode supporting the first upstream rate as the target operation mode;
for a subordinate gateway device supporting the second operation mode in the third-type subordinate gateway devices, in a case of determining that the subordinate gateway device supporting the second operation mode receives the first identifier and does not receive the second identifier, determining the first operation mode supporting the first upstream rate as the target operation mode.

14. The communication method for the gateway device according to any one of claims 2 to 13, wherein the channel identifier is carried in the message field in at least one of the following manners: carrying the channel identifier by a serial number request field; or carrying the channel identifier by a Protocol Layer Overhead Administration Message (PLOAM) field.

15. The communication method for the gateway device according to claim 14, wherein the communication method further comprises:
determining extended burst length information from the PLOAM field in a case of carrying the channel identifier by the PLOAM field;
determining the target upstream rate indicated by the channel identifier carried in the message field, and determining the target operation mode of the subordinate gateway device supporting the target upstream rate, wherein determining the target upstream rate indicated by the channel identifier carried in the message field, and determining the target operation mode of the subordinate gateway device supporting the target upstream rate comprises:
determining the target upstream rate indicated by the extended burst length information, and determining the target operation mode of the subordinate gateway device supporting the target upstream rate.

16. The communication method for the gateway device according to any one of claims 1 to 13, wherein communicating, by the subordinate gateway device, with the main gateway device according to the target operation mode comprises:
determining an upstream rate of an operation mode of the subordinate gateway device during a power-on operation;
in a case of determining that the main gateway device supports the upstream rate of the operation mode of the subordinate gateway device during the power-on operation, communicating, by the subordinate gateway device, with the main gateway device according to the target operation mode;
acquiring external configuration information in a case of determining that the main gateway device does not support the upstream rate of the operation mode of the subordinate gateway device during the power-on operation; and
switching, based on the external configuration information, the upstream rate of the operation mode of the subordinate gateway device during the power-on operation, until the main gateway device supports the upstream rate of the operation mode of the subordinate gateway device during the power-on operation.

17. The communication method for the gateway device according to any one of claims 1 to 13, wherein after communicating, by the subordinate gateway device, with the main gateway device according to the target operation mode, the communication method further comprises:
acquiring an activation process preset for the subordinate gateway device in response to a starting instruction for starting the subordinate gateway device; and
activating the subordinate gateway device according to the activation process.

18. A communication system for a gateway device, comprising:
a main gateway device and a subordinate gateway device, wherein the subordinate gateway device is configured to communicate with the main gateway device according to a target operation mode, wherein the target operation mode is determined according to an upstream rate supported by the main gateway device and an upstream rate supported by the subordinate gateway device.

19. A computer readable storage medium, wherein the storage medium stores a computer program, and the computer program, when running on a processor, causes the processor to execute the communication method according to any one of claims 1 to 17.

20. An electronic apparatus, comprising a memory and a processor, wherein the memory stores a computer program, and the processor is configured to run the computer program to execute the communication method according to any one of claims 1 to 17.
